# EUROPEAN PATENT APPLICATION

(11) **EP 2 775 685 A1**
(43) Date of publication of application: **10.09.2014**
(21) Application number: 13157971.6
(22) Date of filing: 06.03.2013
(51) Int. Cl.: H04L 29/06

(54) **Security zones in industrial control systems**

(71) Applicant: ABB Research Ltd., 8050 Zürich (CH)
(72) Inventor: Hadeli, Hadeli, 5400 Baden (CH); Hristova, Ana, 5400 Baden (CH); Obermeier, Sebastian, 5107 Schinznach-Dorf (CH); Vorst, Philipp, 68259 Mannheim (DE)
(74) Representative: ABB Patent Attorneys

(57) **Abstract**

The present invention is concerned with security zoning or clustering, i.e. the task of defining a set of non-overlapping security zones and assigning each node or resource of an Industrial Automation and Control System (IACS) to exactly one zone. The invention is based on deterministic, engineered information about network nodes of the IACS as retrieved from an IACS system description file or equivalent representation of the system configuration. The invention suggests an automated, structured and repeatable approach for segmenting the network of an IACS to better provide cyber security functionalities in an IACS installation, to decrease the risk for unintentional errors and to provide traceable documentation on the network segregation. The invention allows for more thorough zoning than that performed manually by engineers, especially when dealing with complex network topologies, and reduces the time that engineers need to spend in designing an optimal solution that meets all the security zoning requirements and rules.

## Description

### FIELD OF THE INVENTION

The invention relates to the field of Cyber Security in Industrial Automation and Control Systems, and more specifically to the generation of network security zones in these systems.

### BACKGROUND OF THE INVENTION

Industrial Automation and Control Systems (IACS) are used extensively to protect, control and monitor industrial processes in industrial plants for e.g. manufacturing goods, transforming substances, or generating power, as well as to monitor and control distributed primary systems like electric power, water or gas supply systems or telecommunication systems, including their respective substations. An industrial automation system generally has a large number of resources including process controllers or intelligent electronic devices distributed in an industrial plant or spread over a distributed primary system, and communicatively interconnected via an IACS communication network based e.g. on Ethernet or fieldbus.

A traditional flat network approach in an IACS, which allows all devices to communicate with each other, is no longer tolerable due to the security risks that it imposes. Therefore, an IACS communication network must be segregated or divided into different network security zones. A network security zone is a collection of network nodes or resources such as controllers, servers, PCs that share common security exposure and risk in terms of criticality and consequence. Any communication between zones must be via a defined conduit. Conduits control access to zones, and include security controls intended to mitigate a difference between security level capacity and security requirements of a zone. Exemplary conduits include inter-zone barrier devices such as firewalls, routing devices with Access Control Lists (ACLs), or switches with layer 3 capabilities enabled and ACLs. In this context it has to be noted that Virtual Local Area Network (VLAN) concepts alone do not provide security mechanisms sufficient to separate traffic from different security zones. Likewise, sub-nets or sub-networks as logical divisions of an IP network are separated by routers, and only qualify as security zones if the latter include Access Control Lists (ACLs) or if firewalls are used. Generally, a security zone might comprise several subnets.

In the current practice, security zoning has mostly been done by a human in an ad-hoc and intuitive manner based on experience and best practices, with little support for planning the network segregation. However, such approach makes generation and further maintenance of corresponding diagrams hard especially when their creation is not done based on consistent criteria.

A white paper by Eric Byres, entitled "Using ANSI/ISA-99 Standards to Improve Control System Security", May 2012, elaborates about the ANSI/ISA-99 Zone and Conduit Model and how to implement zones and conduits for control networks. According to the white paper, the ISA99.03.02 standard ISA/IEC 62443-3-2 "Security for Industrial Automation and Control Systems - Target Security Assurance Levels for Zones and Conduits" provides a general specification on how to do the zoning by specifying the requirements for zones and conduits definition. This standard requires establishing zones and conduits by grouping assets based on one or several zoning criteria involving function, location, responsible organization and high-level risk assessment of the individual resources to be zoned, as well as applying compensating controls for communication protocols not capable of providing sufficient security.

However, if zone designing, or zoning, is done manually following the described standards and guidelines, the results still depend on the design of the engineer. Iterations of the design may also change the zoning in an inconsistent manner. Thus, the process is hard to repeat and dependent on the engineer's knowledge. The result derived in this way is thus more error-prone than automated approaches, particularly due to the potential complexity of the network and the number of nodes that need to be handled, and the fact that each person can have a different reasoning mechanism on how to perform this operation.

Present-day IACS have a standardized configuration description or representation including a vast number of deterministic information about the constituents of the IACS in machine-readable format. In the area of Substation Automation (SA), such information is usually comprised in the IEC 61850 SCD (System Configuration Description) file, while in process automation; exemplary IACS description information may be included in an ABB System 800xA Planner File.

### DESCRIPTION OF THE INVENTION

It is therefore an objective of the invention to improve consistency in deriving a security zoning solution for an Industrial Automation and Control System (IACS). This objective is achieved by a method and a device according to the independent claims. Preferred embodiments are evident from the dependent patent claims.

According to the invention, security zoning or clustering, i.e. the task of defining a set of non-overlapping security zones and assigning each node or resource of the IACS to exactly one zone, is based on deterministic, engineered information about network nodes of the IACS as retrieved from an IACS system description file or equivalent representation of the system configuration, or as retrieved directly from the network nodes. The invention suggests a structured and repeatable approach for segmenting the network of an IACS to improve cyber security functionalities in an IACS installation, to decrease the risk for unintentional errors and to provide traceable documentation on the network segregation. The invention allows for more thorough zoning than that performed manually by engineers, especially when dealing with complex network topologies, and reduces the time that engineers need to spend in designing an optimal solution that meets all the security zoning requirements and rules.

Specifically, a method of defining, or designing, in an automated manner, network security zones in a communication network of an Industrial Automation and Control System (IACS) with a standardized configuration description such as an IEC 61850 System Configuration Description (SCD) for Substation Automation (SA) systems comprises the steps of
- retrieving, or collecting, from the standardized configuration description and for each network node of a plurality of network nodes of the IACS, a first attribute value of a first security-relevant attribute or property of the node,
- applying, or evaluating, a first zoning rule based on, or involving, the first attribute values of the network nodes, to define first network security zones and to assign network nodes with a same or at least comparable first attribute value to a common, or shared, zone of the first network security zones.

In an advantageous embodiment of the invention, the zoning process is iterated and a second or further zoning rule is evaluated in order to further subdivide or refine the first network security zones. Evaluating second attribute values of second security-relevant attributes of the network nodes by the second zoning rule allows defining second network security zones and assigning network nodes with a same second attribute value to a common zone of the second network security zones.

In a preferred variant of the invention several zoning solutions for a plurality of nodes are available or possible according to a first zoning rule, each solution including an assignment of the plurality of nodes to a respective set of zones. In this case, an optimization criterion is selected, and a preferred solution according to the optimization criterion is identified among the several initial zoning solutions. The optimization criteria may involve minimization of bridging/routing costs (in terms of computing power) related to the conduits or network security zone boundaries, minimization of the overall cost of the solution from a financial aspect (hardware investment, e.g. number of firewalls), as well as user-defined and customizable parameters. The optimization criteria may also be applied to compare a parent solution and a child solution that has been developed out of the parent solution while maintaining consistency with the first zoning rule.

Additional security-relevant information may be obtained by investigating the implemented, or actual, topology of the communication network by means of dedicated tools. Considering more detailed data about the network topology such as a physical communication structure including the location and connectivity of network switches of the implemented network is advisable in case the system description is limited to logical data flow, and/or outdated.

The present invention also relates to a device, module or computer program product adapted to evaluate a standardized configuration representation of an IACS with a plurality of network nodes in view of security zoning.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a communication network architecture of an IACS; and
Fig.2 schematically shows the network architecture divided into four security zones.

### DETAILED DESCRIPTION OF PREFERRED EMBODIMENTS

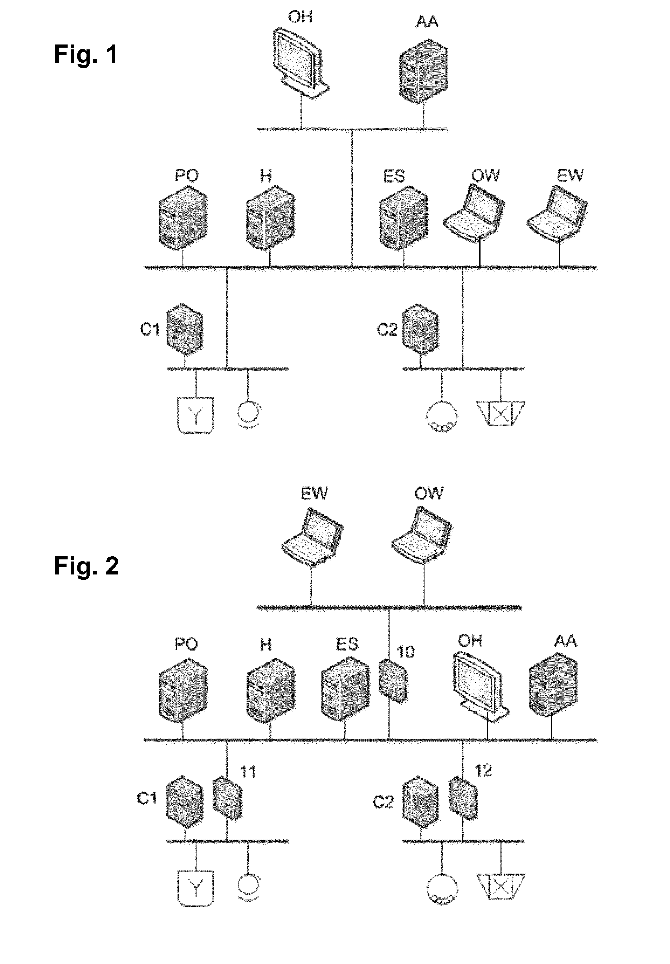

Fig.1 shows the communication network architecture of an exemplary Industrial Automation and Control System (IACS). The IACS comprises a number of devices or resources at the nodes of the network, c.f. the table below. On the lowest level, the controllers C1 and C2 are connected to primary equipment. From the corresponding system configuration description, exemplary security-relevant properties of each node are retrieved and reported in the following table.

| **Node / Function** | **Criticality** | **Location** | **Security control level** | **Redun dancy** | **Depen dency** |
|---|---|---|---|---|---|
| Controller Set (C1) | 5 | A | 1 | Y | AA |
| Controller Set (C2) | 5 | B | 1 | Y | AA |
| Plant Optimizer (PO) | 4 | C | 4 | N | C1, C2 |
| Historian (H) | 4 | C | | Y | C1, C2 |
| Engineering server (ES) | 4 | C | | N | C1, C2 |
| Operator workstation (OW) | 3 | C | | N | |
| Engineer Workstation (EW) | 3 | C | | N | ES |
| Operator HMI (OH) | 4 | C | | N | OW, ES, H, PO |
| Authentication & Authorization server (AA) | 4 | C | | Y | - |

The various single-node security-relevant properties include:
*Function*: refers to type or functionality of the node. This property may determine the conventional assignment to subnets such as control or corporate. In the example of Fig.1, all nodes are assigned to the IACS control network.
*Criticality*: refers to the operational state - the higher the criticality value, the more dependent the IACS is on the node. In IACS, controllers are very important.
*Location*: refers to the geographical location (cabinet, building, or city) where the node is installed.
*Security control level*: refers to whether the node has the ability to protect itself from cyber security attacks. The higher value imposes on better security control available on that particular node. Security controls include but are not limited to access control, antivirus program, host firewall, host intrusion detection and prevention system, anti-malware program, application whitelisting.
*Redundancy*: refers to whether there is an equivalent redundant node to this node, and identifies the former.
*Dependency*: refers to which further nodes this particular node logically depends on.

The single-node information retrieved for each node may further include *accessibility* of the node (whether access to the node requires physical access to the machine or the node has remote access enabled as well), *responsible organization* that manages the asset, required *security assurance level* (deduced based on the high-level risk assessment), *virtualization* (whether the node is a virtual node and runs as a guest node on a host machine (hypervisor), need for *connectivity to the Internet.*

Additional information may be obtained by investigating the implemented, or actual, topology of the communication network by means of dedicated tools. Such additional information includes *connectivity to other nodes* within a physical communication structure including the location and connectivity of network switches of the implemented network. The information may also include sub-network information of the assets (DMZ, corporate network, control network etc.).

The zoning mechanism allows for customizing the zoning criteria based on which the clustering will be performed. Conventional zoning criteria according to ISA 99 include zoning rules based on function, geographical location, responsible organisation, high-level security risk. More elaborate rules involve, or exploit, further security-relevant single-node properties such as criticality level, redundancy, remote accessibility, and Internet connectivity. Instances of the zoning rules include:
(Z1) Assign the nodes requiring exposure of external services to the Internet or other untrusted network to a separate zone, i.e. a demilitarized zone (DMZ).
(Z2) Place nodes with different criticality levels into separate zones.
(Z3) Place nodes with same security control levels in the same zone.
(Z4) Place redundant nodes in separate zones.
(Z5) If virtualization is applied, all the guest nodes on one physical host should belong to the same zone.
(Z6) Interdependencies to other systems/nodes - Connect nodes that communicate between each other to the same security zone.

Fig.2 depicts the communication network architecture of the Industrial Automation and Control System IACS of Fig.1, together with three firewalls (10, 11, 12) that serve as barrier devices separating four security zones. In this case the geographical location and the criticality levels of the nodes have been selected for conducting the zoning. Therefore, as the Controller Sets C1 and C2 are geographically separated from the rest of the nodes and placed in mutually distinct locations, the two controller sets are assigned to two separate zones. Furthermore, with the criticality level as second criteria, all nodes with criticality level 4 have been placed in the same zone, while the nodes with the lowest criticality level are placed in a shared zone, that is, at the top of the hierarchy of the network topology, and all zones are separated from each other by a firewall.

The following auxiliary rules may be helpful when defining the zones:
(A1) If there is a requirement on higher level of security assurance between zones, then use paired firewalls (i.e. separate two zones by a pair of firewalls instead of a single firewall).
(A2) Place a server for managing redundant networks via a suitable redundancy protocol such as RNRP as a router between the redundant network and the firewall. In this case the firewall can communicate with the nodes even if they lose the primary network path.

In case a plurality of distinct initial solutions have been devised in accordance with the zoning rule(s) selected, on or more of the following optimization criteria may help in identifying a preferred solution:
(O1) Minimize the number of bridging / routing devices in the system.
(O2) Minimize the number of zones within certain bounds.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of defining network security zones in a communication network of an Industrial Automation and Control System IACS with a configuration description and including a plurality of network nodes, comprising
- retrieving, from the configuration description and for each network node, a first attribute value of a first security-relevant attribute of the node,
- applying a first zoning rule to the first attribute values of the plurality of network nodes, to define first network security zones and to assign network nodes with a same first attribute value to a common zone of the first network security zones.

2. The method of claim 1, comprising
- applying a second zoning rule to second security-relevant attribute values of the network nodes, to define second network security zones and to assign network nodes with a same second security-relevant attribute value to a common zone of the second network security zones.

3. The method of claim 1, wherein the security-relevant attributes include a function, location, responsible organization and high-level risk assessment of a network node.

4. The method of claim 1, wherein the security-relevant attributes include a criticality level, an internet connectivity, a security control level, a redundancy and wherein the zoning rules include
- assigning nodes with different criticality level values to separate zones,
- assigning Internet-facing nodes to a different security zone than non-Internet-facing nodes,
- assigning nodes with a similar security control level to a common zone,
- assigning redundant nodes to distinct zones.

5. The method of claim 1, comprising
- selecting an optimization criterion, and
- identifying, among two zoning solutions including assignments of a plurality of nodes to a respective set of zones according to the first zoning rule, a preferred solution according to the optimization criterion.

6. A device adapted to evaluate a standardized configuration representation of an Industrial Automation and Control System IACS with a plurality of network nodes and adapted to define network security zones in a communication network of the IACS according to the method of one of claims 1 to 5.
